# FASCICULE DE BREVET EUROPEEN

(11) **EP 1 894 479 B1**
(45) Date de publication et mention de la délivrance du brevet: **09.03.2016**
(21) Numéro de dépôt: 07115207.8
(22) Date de dépôt: 29.08.2007
(51) Int. Cl.: A23L 3/36

(54) **DISPOSITIF DE REFROIDISSEMENT DE PRODUITS LIQUIDES OU PÂTEUX COMPRENANT DES MOYENS DE PORTIONNAGE À L'AIDE DE MOYENS DE PRÉDÉCOUPE, ET PROCÉDÉ D'UTILISATION CORRESPONDANT.**
VORRICHTUNG ZUM KÜHLEN VON FLÜSSIGEN ODER TEIGARTIGEN PRODUKTEN, DIE PORTIONIERMITTEL MIT HILFE VON VORSCHNEIDEVORRICHTUNGEN UMFASST UND ENTSPRECHENDES ANWENDUNGSVERFAHREN
DEVICE FOR COOLING LIQUID OR DOUGHY PRODUCTS COMPRISING MEANS FOR DIVIDING THEM INTO PORTIONS USING CUTTING MEANS, AND METHOD OF USING SAME.

(30) Priorité: 30.08.2006 FR 0607634
(43) Date de publication de la demande: 05.03.2008
(73) Titulaire: C.I.M.S., 72032 Sablé-sur-Sarthe (FR)
(72) Inventeur: Munoz, Yves, 72300 Auvers-le-Hamon (FR)
(74) Mandataire: Vidon Brevets & Stratégie

(56) Documents cités:
- EP-A- 0 223 884
- EP-A- 0 937 413
- EP-A- 1 449 443
- WO-A-01/04554
- WO-A-91/00693
- WO-A-97/01287
- FR-A- 2 881 927
- US-A- 2 941 560
- US-A- 3 436 927
- US-A- 4 193 272
- US-A- 4 268 532
- US-A- 5 037 350

## Description

L'invention concerne le domaine du froid industriel. Plus précisément, l'invention concerne les dispositifs de refroidissement de produits, en particulier alimentaires, du type de ceux dans lesquels les produits défilent dans une enceinte de refroidissement avant conditionnement.

Dans l'industrie agroalimentaire, les exigences normatives et réglementaires en matière de chaîne du froid sont de plus en plus strictes. Suivant la nature du produit alimentaire et la durée de conservation que l'on envisage pour celui-ci, différentes techniques de refroidissement peuvent être utilisées.

Parmi celles-ci on connaît notamment les tunnels de refroidissement, selon lesquels les produits alimentaires défilent dans une enceinte intégrant des moyens de génération d'air froid, appelés également batterie d'air froid, le défilement des produits étant assuré par un tapis déroulant sur lequel ces produits reposent. Généralement, le tapis déroulant chemine à l'intérieur de l'enceinte.

Classiquement, les moyens de génération d'air froid intégrés dans l'enceinte de ces tunnels comprennent un ventilateur, formant moyen de soufflage.

On connaît notamment une technique selon laquelle la batterie d'air froid est constituée par un échangeur à ailettes placé entre le ventilateur d'air froid et les produits à refroidir, aucun moyen spécifique n'étant prévu pour répartir l'air froid de façon homogène à l'intérieur de l'enceinte.

On connaît également une autre technique selon laquelle on tente de répartir l'air froid à l'intérieur de l'enceinte à l'aide d'une plaque pourvue d'une pluralité de trous, cette plaque étant placée entre le ventilateur d'air froid et les produits à refroidir.

Selon une autre technique décrite dans le document de brevet publié sous le numéro FR-2 851 426 et déposé au nom de la présente Demanderesse, le dispositif de refroidissement comprend au moins un caisson dans lequel l'air froid est soufflé, ledit caisson étant pourvu de fentes de façon à générer un flux d'air froid lamellaire dirigé vers les produits.

De cette façon, on obtient une bonne répartition de l'air froid à l'intérieur de l'enceinte, et ceci en supprimant, ou à tout le moins en limitant les pertes de charges constatées dans certaines des techniques de l'art antérieur.

Aussi, du fait de la meilleure répartition de l'air froid dans l'enceinte, on améliore l'efficacité du refroidissement, ce qui permet d'envisager une réduction du temps de présence des produits dans l'enceinte, et donc d'augmenter les cadences en termes de vitesse de défilement des produits.

De tels dispositifs de refroidissement peuvent être utilisés pour tout type de produits, alimentaires ou non.

Une application particulière du dispositif concerne les produits alimentaires, liquides ou pâteux, tels que les sauces, les légumes en purée (épinards, carottes, céleri...).

Pour ce type de produits, ceux-ci sont amenés en nappe dans le dispositif de refroidissement, à la sortie duquel le produit (alors surgelé ou congelé) se présente sous la forme d'une bande solide.

Cette bande solide doit ensuite subir une ou plusieurs opérations de portionnage en vue de son conditionnement.

Une technique connue de portionnage de produits congelés vise à obtenir des galets de produits. Pour cela, des blocs de produits congelés sont formés ; ceux-ci sont stockés, puis ultérieurement réchauffés de façon à permettre leur broyage (le produit à l'état congelé présentant une dureté trop importante pour pouvoir être aisément broyé). Le produit sous sa forme broyée est alors formé à l'aide de mâchoires qui compriment le produit sous forme de galets.

Cette technique présente plusieurs inconvénients.

Comme indiqué précédemment, les produits sont comprimés dans des mâchoires qui leur donnent une forme de galet. Cette opération de formage tandis que le produit est remonté en température implique une perte d'eau (ou de jus) lors de la compression du produit. Cela entraîne un assèchement du produit, ce qui n'est pas souhaitable pour ses propriétés organoleptiques.

En outre, les opérations successives et les remontées en température correspondantes tendent à augmenter considérablement les risques de contamination du produit.

Bien entendu, un tel risque doit être évité.

Par ailleurs, une technique de ce type occasionne des temps de cycle relativement longs et nécessite la mise en oeuvre de moyens complexes et coûteux.

Selon une autre technique, le portionnage est réalisé à l'aide d'une matrice de découpe au travers de laquelle on presse le produit.

A nouveau, cette technique occasionne, du fait du pressage, des pertes d'eau du produit.

De plus, on constate en pratique que les portions présentent des formes irrégulières, peu satisfaisantes.

Selon encore une autre technique, le portionnage est réalisé directement en amont du refroidissement, ceci à l'aide d'un support mobile destiné à circuler dans l'enceinte de refroidissement et présentant des alvéoles dans lesquelles sont disposées des doses de produits.

Le support mobile alvéolé est réalisé en un matériau métallique qui fatigue relativement rapidement du fait des cycles successifs, ceci en étant soumis à des variations de température fréquentes et importantes. En pratique, il est nécessaire de remplacer régulièrement ce support mobile, ce qui implique des arrêts fréquents du dispositif et/ou des surcoûts d'exploitation.

On connait en outre les techniques décrites par les documents de brevet WO-91/00693, EP-0 223 884, US-3 436 927, EP-0 937 413, US-4 193 272, US-4 268 532 et WO-97/01287 qui concernent des dispositifs de refroidissement comprenant des moyens de portionnage.

L'invention a notamment pour objectif de pallier les inconvénients de l'art antérieur.

Plus précisément, l'invention a pour objectif de proposer une technique de portionnage de produits associée à un dispositif de refroidissement qui soit moins coûteux en termes d'installation et/ou d'exploitation et/ou de maintenance, ceci tout en assurant la préservation des propriétés organolcptiques des produits.

L'invention a également pour objectif de fournir une telle technique qui limite les risques de contamination des produits.

L'invention a aussi pour objectif de fournir une telle technique qui permette un portionnage de forme régulière des produits.

L'invention a encore pour objectif de fournir une telle technique qui soit simple de conception et facile à mettre en oeuvre.

Ces objectifs, ainsi que d'autres qui apparaîtront par la suite, sont atteints grâce à l'invention qui a pour objet un dispositif de refroidissement conforme à la revendication 1.

De cette façon, on évite de comprimer ou de presser les produits (dans des mâchoires ou au travers d'une matrice), ce qui permet de conserver toute l'eau des produits et de préserver les qualités organoleptiques de ceux-ci.

De plus, comme cela va apparaître plus clairement par la suite, l'invention permet de procéder en plusieurs temps :
- une première étape de refroidissement à l'aide du premier module de refroidissement au cours de laquelle un croûtage (congélation essentiellement de la surface du produit) du produit est réalisé ;
- une étape de prédécoupe réalisée sans difficultés du fait du seul croûtage (un produit à l'état congelé présentant une dureté telle qu'il devient excessivement difficile à découper).

On peut ensuite séparer les portions en amenant les produits à l'état congelé, ceux-ci devenant alors cassants, en particulier dans les zones de prédécoupe.

On obtient alors des portions de formes régulières.

Ces opérations peuvent être effectuées au cours d'une même chaîne de froid, sans nécessiter de remontée(s) de température comme dans le cas de l'art antérieur, ce qui limite, voire supprime, les risques de contamination des produits.

Selon une solution préférée, lesdits moyens de prédécoupe comprennent deux moyens de prédécoupe successifs, l'un produisant au moins une prédécoupe longitudinale et l'autre au moins une prédécoupe transversale.

Dans ce cas, lesdits moyens de prédécoupe longitudinale sont préférentiellement en amont dudit moyen de prédécoupe transversale par rapport audit sens de défilement.

Selon une solution avantageuse, ledit moyen de prédécoupe longitudinale comprend au moins un disque rotatif coupant.

Selon une première variante, ledit disque coupant présente une lame périphérique continue.

Selon une deuxième variante, ledit disque coupant présente une denture périphérique.

Le disque coupant peut donc être aisément changé en fonction de la nature, et en particulier de la dureté des produits.

Préférentiellement, ledit moyen de prédécoupe transversale comprend au moins une guillotine.

Selon un mode de réalisation préféré, le dispositif comprend au moins un deuxième module de refroidissement entre lesdits moyens de prédécoupe et lesdits moyens de séparation.

Un tel deuxième module de refroidissement permet, dans la continuité de la prédécoupe, d'amener les produits à l'état surgelé ou congelé, état dans lequel ils sont cassants, en particulier au niveau des zones de prédécoupe.

Dans ce cas, lesdits moyens d'entraînement comprennent avantageusement au moins un organe rotatif destiné à venir au contact desdits produits.

On note que des moyens d'entraînement différents peuvent être mis en oeuvre selon d'autres modes de réalisation envisageables, par exemple en mettant en oeuvre une ou plusieurs bandes sans fin.

Selon une autre caractéristique, lesdits moyens de séparation comprennent un système de martelage destiné à briser lesdites rainures.

Les produits étant amenés dans un état cassant, de tels moyens s'avèrent simples et efficaces pour obtenir la séparation des portions.

L'invention concerne également un procédé caractérisé en ce qu'il comprend les étapes successives suivantes :
- une première étape de refroidissement desdits produits ;
- au moins une étape de prédécoupe produisant des rainures sur lesdits produits de façon à délimiter des portions et des moyens de séparation desdites portions ;
- au moins une deuxième étape de refroidissement desdits produits ;
- au moins une étape de séparation desdites portions.

Préférentiellement, ladite première étape est une étape de croûtage et ladite deuxième étape est une étape de surgélation ou de congélation.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue en perspective d'un module de prédécoupe destiné à équiper un dispositif de refroidissement selon l'invention ;
- les figures 2 et 3 sont respectivement des vues de dessus et de côté du dispositif de prédécoupe illustré par la figure 1 ;
- la figure 4 est une représentation schématique d'un dispositif de refroidissement selon l'invention ;
- les figures 5 et 6 sont dés représentations schématiques de moyens de séparation de portions prédécoupées.

Tel qu'indiqué précédemment, le principe de l'invention réside dans le fait de concevoir un dispositif de refroidissement de telle sorte qu'il comprend un premier module de refroidissement préférentiellement destiné à produire un croûtage des produits, en aval duquel sont prévus des moyens de portionnage comprenant des moyens de prédécoupe, des moyens de séparation assurant ensuite la séparation des portions de produits prédécoupés.

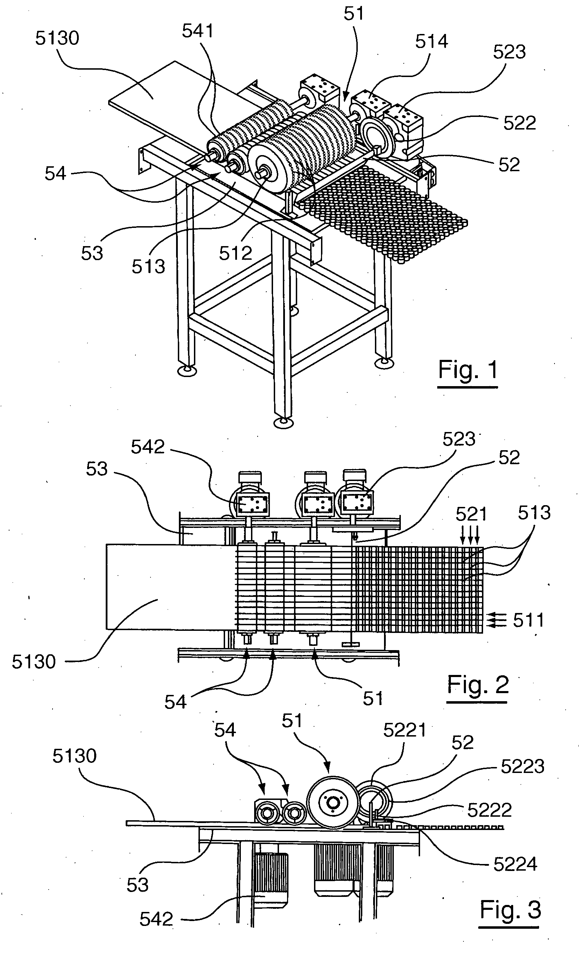

En référence à la figure 2, un dispositif de refroidissement du type de celui de l'invention comprend, de façon connue en soi, une enceinte 100 incluant des batteries d'air froid 1 et des ventilateurs 2. Un tel dispositif comprend également un support 3 sur lequel sont disposés des produits à refroidir, le déplacement de ces produits à l'intérieur de l'enceinte étant assuré par le défilement du support.

L'air froid généré par les batteries 1 est soufflé à l'intérieur de caissons 4 pourvus de fentes 41 permettant de générer un flux d'air froid lamellaire dirigé vers les produits.

Selon le présent mode de réalisation, ce caisson est constitué par un ensemble de tuyères conçues et positionnées sous la batterie d'air froid 1 de telle sorte que l'axe longitudinal des fentes 41 soit sensiblement perpendiculaire à l'axe de défilement des produits.

Les fentes 41 des tuyères 4 s'étendent sensiblement sur toute la largeur du support 3, les tuyères 4 étant par ailleurs réparties sur toute la longueur du support.

Chacune des tuyères 4 présente, vue de face en considérant l'axe de défilement des produits, une forme d'éventail ouvert en direction des produits, tandis qu'elle présente un profil en forme d'entonnoir qui se rétrécit en direction des produits à refroidir.

Selon le principe de l'invention, le dispositif de refroidissement intègre un module de prédécoupe 5 placé dans le sens de défilement des produits (indiqué par la flèche F1) en aval d'un premier module de refroidissement 10.

On note que la position du module de prédécoupe peut varier sur la longueur du dispositif de refroidissement (ceci étant illustré par la représentation de deux modules de prédécoupe 5, le dispositif de refroidissement n'intégrant en pratique qu'un seul module de prédécoupe).

Un mode de réalisation préférentiel des moyens de prédécoupe est illustré par les figures 1 à 3.

Tel que cela apparaît sur ces figures, un module de prédécoupe comprend :
- un moyen de prédécoupe longitudinale 51 destiné à réaliser des rainures longitudinales 511, c'est-à-dire parallèles à la direction de défilement des produits 5130 ;
- un moyen de prédécoupe transversale 52 destiné à réaliser des rainures transversales 521, c'est-à-dire perpendiculaires à la direction de défilement des produits 5130.

Une fois réalisées, les rainures 511 et 521 délimitent ensemble une pluralité de portions de produits 513.

On comprend donc que le produit 5130 arrive avec une forme de bande sensiblement plate à l'entrée du module de prédécoupe, subit un premier rainurage longitudinal à l'aide du moyen de prédécoupe 51, puis un deuxième rainurage transversal à l'aide du moyen de prédécoupe 52.

On note que le produit défile sur un plan de prédécoupe 53 distinct du support mobile 3 du module de refroidissement.

Le défilement des produits sur ce plan de prédécoupe 53 est assisté par au moins un organe rotatif d'entraînement qui reprend le produit 5130 déjà entraîné par le support mobile (le plan de prédécoupe 53 étant dans la continuité du support mobile 3) et le contraint à passer dans les moyens de prédécoupe (ceux-ci tendent en effet à créer une force en opposition au défilement des produits, force d'opposition que l'entraînement du support mobile pourrait ne pas suffire à surmonter au risque d'engendrer un bourrage).

Selon le présent mode de réalisation, l'organe d'entraînement rotatif comprend deux tambours 54 portant une série de roues dentées 541. Un des tambours 54 est entraîné en rotation par un moteur 542 (ce tambour ayant une fonction première d'entraînement), tandis que l'autre tambour est libre en rotation et a pour fonction de plaquer le produit contre le plan de prédécoupe 53.

Préférentiellement, les moyens de prédécoupe comprennent :
- une série de disques coupants 512 (présentant à leur périphérie une lame continue ou une denture selon la dureté du produit) pour la prédécoupe longitudinale (le nombre de disques et l'écartement entre eux peuvent varier en fonction des dimensions souhaitées des portions) ;
- une guillotine 52 pour la prédécoupe transversale.

Les disques 512 de découpe longitudinale sont portés par un tambour 513 entraîné en rotation par un moteur 514.

La guillotine 52 est couplée à l'une de ses extrémités à une roue 522 présentant une gorge 5221 de guidage d'une extrémité 5222 de la guillotine, cette gorge 5221 présentant une forme circulaire avec une chicane 5223 prévue pour engendrer, pendant la rotation de la roue 522, un mouvement de va-et-vient vertical de la guillotine.

L'autre extrémité de la guillotine est montée dans une glissière de guidage 5224 en translation verticale de la guillotine.

Bien entendu, la profondeur de prédécoupe, et par conséquent la position en hauteur des moyens de prédécoupe 51, 52 (ainsi que celle des moyens d'entraînement 53) est adaptée en fonction de l'épaisseur des produits.

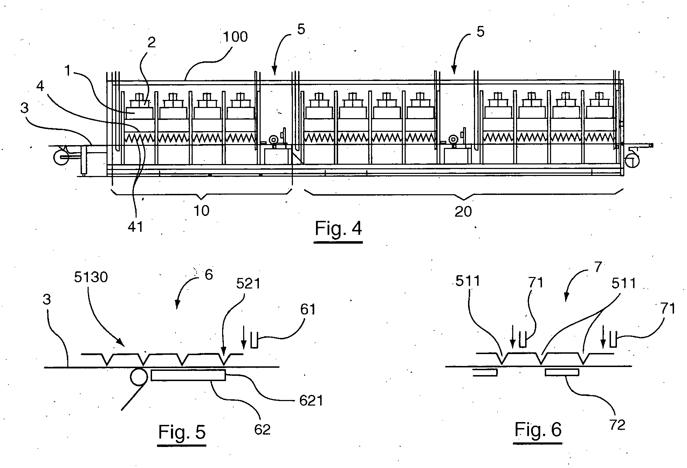

Par ailleurs, un dispositif de refroidissement selon un mode de réalisation préférentiel comprend quatre modules successifs :
- un premier module de refroidissement 10 prévue pour réaliser une étape de croûtage des produits ;
- un module de prédécoupe 5 tel que celui décrit précédemment et permettant un rainurage des produits délimitant des portions ;
- un deuxième module de refroidissement 20 (étant entendu que, dans la mesure où le module de prédécoupe est présent en amont de ce module 20, ce dernier n'inclut pas le deuxième module de prédécoupe 5 représenté sur la figure 4) prévu pour réaliser une étape de surgélation ou de congélation des produits prédécoupés ;
- un module de séparation des portions décrit ci-après.

Préférentiellement, la séparation des produits est réalisée en deux étapes successives : la première visant à briser les prédécoupes transversales 521 et la suivante visant à briser les prédécoupes longitudinales 511.

Ces étapes sont réalisées respectivement à l'aide des moyens de séparation 6 et 7 respectivement illustrés par les figures 5 et 6.

En référence à la figure 6, les produits 5130 sortent du deuxième module de refroidissement en étant entraînés par le support mobile 3 correspondant et sont amenés sur un élément 62 du moyen de séparation 6.

Ce moyen de séparation 6 comprend en outre un organe de martelage 61 placé au-dessus des produits et à proximité immédiate de l'élément 62, en aval de celui-ci selon le sens de défilement des produits.

L'organe de martelage est animé d'un mouvement de va-et-vient vertical cadencé de telle sorte qu'à chaque fois qu'une rainure 521 arrive légèrement en aval de l'extrémité aval 621 de l'élément 62, l'organe de martelage 61 frappe le produit.

Le produit présent au niveau de l'extrémité aval 621 de l'élément 62 étant en appui en amont de la rainure 521, et en l'absence d'appui en aval de l'extrémité 621, le martelage entraîne une cassure du produit (celui-ci étant rendu cassant du fait de son état surgelé ou congelé) au niveau de la rainure 521 correspondante.

La bande de produit séparée transversalement du reste du produit en amont est ensuite reprise par un moyen de défilement (non représenté) qui l'achemine au niveau du moyen de séparation 7.

En référence à la figure 6, le moyen de séparation comprend une série d'éléments d'appui 72 disposés de façon à s'étendre entre deux rainures longitudinales 521 et de telle sorte qu'une portion 513 sur deux soit soutenue.

Ce moyen de séparation 7 comprend en outre des organes de martelage 71 au niveau des éléments d'appui 72 et de part et d'autre de ceux-ci.

Les organes de martelage 71 sont animés d'un mouvement de va-et-vient vertical cadencé de telle sorte que chaque fois qu'un produit est présent sur les éléments d'appui 72, les organes de martelage frappent le produit.

En l'absence d'appui de part et d'autre des éléments d'appui 72, le martelage entraîne une cassure du produit au niveau des rainures longitudinales 511.

En sortie des moyens de séparation 6, 7, les portions 513 sont séparées les unes des autres et reprises par un moyen de défilement (non représenté).

## Revendications

1. Dispositif de refroidissement de produits liquides ou pâteux destiné à amener lesdits produits à l'état solide, du type comprenant une enceinte à l'intérieur de laquelle lesdits produits défilent à l'aide d'un support mobile (3), ledit dispositif incluant des moyens de génération d'un flux d'air froid (1), (2), (4) en direction dudit support (3),
**caractérisé en ce qu'**il comprend au moins un premier module de refroidissement (10) et des moyens de portionnage desdits produits en aval dudit premier module (10) dans le sens de défilement desdits produits, lesdits moyens de portionnage comprenant des moyens de prédécoupe (51), (52) produisant des rainures sur lesdits produits de façon à délimiter des portions, ledit dispositif comprenant des moyens de séparation (6), (7) desdites portions, lesdits moyens de prédécoupe (51), (52) surplombant un plan de prédécoupe (53) distinct dudit support mobile (3), ledit dispositif comprenant des moyens d'entraînement (54) desdits produits sur ledit plan de prédécoupe (53).

2. Dispositif de refroidissement selon la revendication 1, **caractérisé en ce que** lesdits moyens de prédécoupe (51), (52) comprennent deux moyens de prédécoupe successifs, l'un produisant au moins une prédécoupe longitudinale (511) et l'autre au moins une prédécoupe transversale (521).

3. Dispositif de refroidissement selon la revendication 2, **caractérisé en ce que** ledit moyen de prédécoupe longitudinale (51) est en amont dudit moyen de prédécoupe transversale (52) par rapport audit sens de défilement.

4. Dispositif de refroidissement selon l'une des revendications 2 et 3, **caractérisé en ce que** ledit moyen de prédécoupe longitudinale (51) comprend au moins un disque rotatif coupant (512).

5. Dispositif de refroidissement selon la revendication 4, **caractérisé en ce que** ledit disque coupant (512) présente une lame périphérique continue.

6. Dispositif de refroidissement selon la revendication 4, **caractérisé en ce que** ledit disque coupant (512) présente une denture périphérique.

7. Dispositif de refroidissement selon l'une quelconque des revendications 1 à 6, **caractérisé en ce que** ledit moyen de prédécoupe transversale (52) comprend au moins une guillotine.

8. Dispositif de refroidissement selon l'une quelconque des revendications 1 à 7, **caractérisé en ce qu'**il comprend au moins un deuxième module de refroidissement (20) entre lesdits moyens de prédécoupe (51), (52) et lesdits moyens de séparation (6), (7).

9. Dispositif de refroidissement selon l'une quelconque des revendications 1 à 8, **caractérisé en ce que** lesdits moyens d'entraînement (54) comprennent au moins un organe rotatif destiné à venir au contact desdits produits.

10. Dispositif de refroidissement selon l'une quelconque des revendications 1 à 9, **caractérisé en ce que** lesdits moyens de séparation (6), (7) comprennent un système de martelage (71) destiné à briser lesdites rainures.

## Patentansprüche

1. Vorrichtung zum Kühlen von flüssigen oder pastösen Produkten, die dazu bestimmt ist, die Produkte in den festen Zustand zu bringen, des Typs, der eine Umschließung aufweist, in deren Inneren die Produkte mit Hilfe eines beweglichen Trägers (3) laufen,
wobei die Vorrichtung Mittel zum Erzeugen eines Kaltluftstroms (1), (2), (4) in Richtung des Trägers (3) aufweist,
**dadurch gekennzeichnet, dass** sie mindestens ein erstes Kühlmodul (10) und dem ersten Modul (10) in der Laufrichtung der Produkte nachgelagert Mittel zum Portionieren des Produkts aufweist, wobei die Mittel zum Portionieren Mittel zum Vorschneiden (51), (52) aufweisen, die Rillen auf den Produkten erstellen, um Portionen abzugrenzen, wobei die Vorrichtung Mittel zum Trennen (6), (7) der Portionen aufweist, wobei die Mittel zum Vorschneiden (51), (52) eine Ebene zum Vorschneiden (53) überragen, die von dem beweglichen Träger (3) getrennt ist, wobei die Vorrichtung Mittel zum Antreiben (54) der Produkte in der Ebene zum Vorschneiden (53) aufweist.

2. Vorrichtung zum Kühlen nach Anspruch 1, **dadurch gekennzeichnet, dass** die Mittel zum Vorschneiden (51), (52) zwei nachfolgende Mittel zum Vorschneiden aufweisen, wobei das eine mindestens einen längsverlaufenden Vorschnitt (511) und das andere mindestens einen querverlaufenden Vorschnitt (521) erstellt.

3. Vorrichtung zum Kühlen nach Anspruch 2, **dadurch gekennzeichnet, dass** das Mittel zum längsverlaufenden Vorschneiden (51) dem Mittel zum querverlaufenden Vorschneiden (52) in Bezug auf die Laufrichtung vorgelagert ist.

4. Vorrichtung zum Kühlen nach einem der Ansprüche 2 und 3, **dadurch gekennzeichnet, dass** das Mittel zum längsverlaufenden Vorschneiden (51) mindestens eine rotierende Schneidscheibe (512) aufweist.

5. Vorrichtung zum Kühlen nach Anspruch 4, **dadurch gekennzeichnet, dass** die Schneidscheibe (512) eine durchgehende Umfangsklinge aufweist.

6. Vorrichtung zum Kühlen nach Anspruch 4, **dadurch gekennzeichnet, dass** die Schneidscheibe (512) eine Umfangsverzahnung aufweist.

7. Vorrichtung zum Kühlen nach einem der Ansprüche 1 bis 6, **dadurch gekennzeichnet, dass** das Mittel zum querverlaufenden Vorschneiden (52) mindestens ein Fallmesser aufweist.

8. Vorrichtung zum Kühlen nach einem der Ansprüche 1 bis 7, **dadurch gekennzeichnet, dass** sie mindestens ein zweites Kühlmodul (20) zwischen den Mitteln zum Vorschneiden (51), (52) und den Mitteln zum Trennen (6), (7) aufweist.

9. Vorrichtung zum Kühlen nach einem der Ansprüche 1 bis 8, **dadurch gekennzeichnet, dass** die Mittel zum Antreiben (54) mindestens ein Drehorgan aufweisen, das dazu bestimmt ist, mit den Produkten in Kontakt zu kommen.

10. Vorrichtung zum Kühlen nach einem der Ansprüche 1 bis 9, **dadurch gekennzeichnet, dass** die Mittel zum Trennen (6), (7) ein Hammersystem (71) aufweisen, das dazu bestimmt ist, die Rillen zu brechen.

## Claims

1. Cooling device for liquid or doughy products which is intended to bring the said products into the solid state, said device being of the type comprising an enclosure inside which the said products scroll with the aid of a scrolling support (3), the said device including means (1), (2), (4) for generating a flow of cold air in the direction of the said support (3), **characterised in that** it comprises at least one first cooling module (10) and means for dividing the said products into portions downstream of the said first module (10) in the direction in which the said products scroll, the said means for dividing into portions comprising pre-cutting means (51, 52) which produce grooves on the said products so as to delimit portions, the said device comprising means (6, 7) for separating the said portions, the said pre-cutting means (51, 52) overhanging a pre-cutting plane (53) which is distinct from the said scrolling support (3), the said device comprising means (54) for conveying the said products along on the said pre-cutting plane (53).

2. Cooling device according to Claim 1, **characterised in that** the said pre-cutting means (51, 52) comprise two successive pre-cutting means, one producing at least one longitudinal preliminary cut (511) and the other producing at least one transverse preliminary cut (521).

3. Cooling device according to Claim 2, **characterised in that** the said longitudinal pre-cutting means (51) is upstream of the said transverse pre-cutting means (52) in relation to the said direction of scrolling.

4. Cooling device according to either of Claims 2 or 3, **characterised in that** the said longitudinal pre-cutting means (51) comprises at least one rotary cutting disc (512).

5. Cooling device according to Claim 4, **characterised in that** the said cutting disc (512) has a continuous peripheral blade.

6. Cooling device according to Claim 4, **characterised in that** the said cutting disc (512) has peripheral toothing.

7. Cooling device according to any one of Claims 1 to 6, **characterised in that** the said transverse pre-cutting means (52) comprises at least one guillotine.

8. Cooling device according to any one of Claims 1 to 7, **characterised in that** it comprises at least one second cooling module (20) between the said pre-cutting means (51, 52) and the said separating means (6), (7).

9. Cooling device according to any one of Claims 1 to 8, **characterised in that** the said conveying means (54) comprise at least one rotary component which is intended to come into contact with the said products.

10. Cooling device according to any one of Claims 1 to 9, **characterised in that** the said separating means (6), (7) comprise a hammering system (71) which is intended to break the said grooves.
